# EUROPÄISCHE PATENTSCHRIFT

(11) **EP 0 995 780 B1**
(45) Veröffentlichungstag und Bekanntmachung des Hinweises auf die Patenterteilung: **06.08.2003**
(21) Anmeldenummer: 99120191.4
(22) Anmeldetag: 09.10.1999
(51) Int. Cl.: C09D 151/00, C08F 265/06, C08F 257/02

(54) **Wässrige, selbstvernetzende Copolymerisatdispersionen, ein Verfahren zu ihrer Herstellung und ihre Verwendung in Bindemitteln für Lacke**
Aqueous self-curing copolymer dispersions, process for their preparation and their use as binder for paints
Dispersions aqueuses de copolymères autodurcissables, leur procédé de préparation et leur utilisation comme liant de peintures

(30) Priorität: 19.10.1998 AT 173998
(43) Veröffentlichungstag der Anmeldung: 26.04.2000
(73) Patentinhaber: Surface Specialities Austria GmbH, 8402 Werndorf (AT)
(72) Erfinder: Kriessmann, Ingo, Dr., 8010 Graz (AT); Awad, Rami-Raimund, Dr., 8042 Graz (AT); Gsöll, Hannelore, 8055 Graz (AT); Hirschmann, Bernhard, 8200 Gleisdorf (AT); Rossmann, Karl, 8142 Wundschuh (AT)
(74) Vertreter: Deckers, Hellmuth, Dr.

(56) Entgegenhaltungen:
- WO-A-96/16998
- US-A- 5 472 996

## Beschreibung

Die Erfindung betrifft wäßrige, selbstvernetzende Copolymerisat-Dispersionen mit einer Kern-Schale-Struktur, wobei mindestens ein Teil der Monomeren, die das Copolymerisat im Kern bilden, neben radikalisch polymerisierbaren olefinisch ungesättigten Gruppen auch Carbonylgruppen und Carboxylgruppen aufweist, und einem Gehalt an Dicarbonsäuredihydraziden oder Bis-Hydrazin-Verbindungen. Weiters betrifft die Erfindung ein zweistufiges Verfahren zur Herstellung dieser wäßrigen, selbstvernetzenden Copolymerisatdispersionen und ihre Verwendung als Bindemittel für lagerstabile Einkomponentenlacke, welche bei Raumtemperatur oder bei erhöhter Temperatur vernetzen.

Aus der EP-A 0 649 865 sind selbstvernetzende Carbonylgruppen-haltige Polyurethan-Vinyl-Hybrid-Dispersionen bekannt, die über Hydrazinverbindungen vernetzen, jedoch keine Kern-Schale-Struktur aufweisen.

Aus der EP-A 0 555 774 sind Copolymerisat-Dispersionen bekannt die durch Copolymerisation von Monomeren mit Carbonylgruppen und Carboxylgruppen entstehen. Auch diese Dispersionen weisen keine Kern-Schale-Struktur auf, da sie in einer einstufigen Polymerisation ohne Änderung der Zusammensetzung der Monomeren-Mischung hergestellt werden. Die Vernetzung der mit diesen Dispersionen hergestellten Bindemitteln erfolgt durch Reaktion mit den als Neutralisationsmittel eingesetzten Polyaminen. Bei diesen Produkten ist einerseits zur Erzielung einer ausreichenden Vernetzungsdichte der Lackfilme ein hoher Anteil an Carbonylgruppen erforderlich, andererseits bewirkt dieser hohe Anteil an entsprechenden Monomeren während der Copolymerisation die Bildung von Stippen und Koagulaten, die nur unter großem zeitlichen und apparativen Aufwand wieder entfernt werden können. Außerdem führt das als Vernetzungskomponente eingesetzte Polyamin zu starker Gelbfärbung des Lackfilmes und damit zu Problemen bei vielen Applikationen.

In der AT-B 402 504 (& WO-A-96/16998) werden selbstvernetzende wäßrige Polymerdispersionen beschrieben, die in einem zweistufigen Verfahren hergestellt werden. Dabei weicht die Zusammensetzung der Monomer-Mischung für die zweite Stufe der Polymerisation von der der ersten Stufe ab. Diese Copolymer-Dispersionen haben geringe Anteile an Carbonylgruppen und ermöglichen hohe Vernetzungsdichten, ohne daß schwer entfernbare Stippen oder Koagulate entstehen. Die als Vernetzungskomponente eingesetzten Polyamine verursachen jedoch ebenfalls eine starke Gelbfärbung der resultierenden Lackfilme.

In der Europäischen Patentanmeldung EP-A 0 795 568 werden wäßrige Polymerdispersionen mit einer Kern-Schale-Struktur beschrieben, wobei im Kern mindestens 50 % solcher Monomere eingesetzt werden, deren Homopolymerisate eine Glastemperatur von unter 0 °C besitzen, und in der Schale solche Monomere zu weniger als 45 % eingesetzt werden. Der Dispersion können auch difunktionelle Säurehydrazide zugesetzt werden. Soweit solche Hydrazide in den Beispielen zugesetzt werden, enthält auch die Monomermischung für die Schale der PolymerTeilchen ein Ketongruppen-haltiges Monomer. Die Auswahl der Monomer-Zusammensetzung wird in diesem Fall nach den angestrebten Mindest-Filmbilde-Temperaturen vorgenommen.

In der AT-B 403 478 werden die aus der AT-B 402 504 bekannten Dispersionen mit niedermolekularen, mehrfunktionellen Isocyanaten im Sinne von Zwei-Komponenten-Bindemitteln kombiniert. Dadurch können zwar Lacke mit verringerter Vergilbungs-Tendenz und verbesserter Beständigkeit gegen Wasser, Chemikalien und Lichteinwirkung bereitgestellt werden, nachteilig sind jedoch die komplizierte Lackherstellung, die begrenzte Topfzeit ("pot life") sowie längere Trockenzeit und geringere Filmhärte.

In der Europäischen Patentanmeldung EP-A 0 619 342 wird eine Zusammensetzung beschrieben, umfassend in Wasser dispergierte Harzpartikel (A), die Carbonylgruppen enthalten und die eine innere und eine äußere Schicht aufweisen, die durch Emulsionspolymerisation einer Monomermischung erhältlich sind, welche Massenanteile enthält von (a) nicht weniger als 0,5 % eines Carbonylgruppen-haltigen Monomeren mit mindestens einer Aldehyd- oder Keton-Gruppe und einer polymerisierbaren Doppelbindung, (b) nicht weniger als 0,5 % einer äthylenisch ungesättigten Carbonsäure, (c) nicht mehr als 99 % eines Monomeren mit einer Wasserlöslichkeit von nicht mehr als 0,8 g / 100 ml bei 20 °C und (d) nicht mehr als 99 % eines ungesättigten Monomeren, das .sich von den Monomeren (a) bis (c) unterscheidet, in Gegenwart von dispergierten Teilchen, die als innere Schicht dienen, und (B) einer hydrophilen Verbindung enthalten ein Hydrazinderivat mit mindestens zwei Hydrazingruppen im Molekül, wobei das Harz, das die äußere Schicht der Partikel bildet, einen Löslichkeitsgrad von mindestes 5 % seiner Masse aufweist, und das Harz, das die innere Schicht der Partikel bildet, einen geringeren Löslichkeitsgrad aufweist als das der äußeren Schicht.

Überraschenderweise wurde nun gefunden, daß wäßrige Copolymerisatdispersionen, die gemäß der AT-B 402 504 nach einem zweistufigen Verfahren hergestellt werden, wobei jeweils Carbonyl- und Carboxylgruppen aufweisende Monomere nur in der ersten Stufe (die zum Kern der Teilchen führt) eingesetzt werden, nach Neutralisation der Carboxylgruppen durch Zusatz von geringen Mengen von Ammoniak, Aminen oder wäßrigen Alkalien mit mehrfunktionellen Hydraziden vernetzbar sind und auf einfache Weise zu Bindemitteln mit ausreichender Topfzeit führen, die zu Lacken mit hoher Filmhärte, guter Beständigkeit gegen mechanische und chemische Einwirkung, rascher Trocknung sowie geringer oder keiner Vergilbungsneigung verarbeitet werden können.

Die Erfindung betrifft demgemäß wäßrige, selbstvernetzende Copolymerisatdispersionen **ABC**, erhältlich durch radikalisch initiierte Copolymerisation in der ersten Stufe von einer Monomerenmischung **A** enthaltend Massenanteile in der Mischung von
**A1** 2 bis 55 %, vorzugsweise 4 bis 45 %, besonders bevorzugt 6 bis 40 %, olefinisch ungesättigten Monomeren mit jeweils mindestens einer Carbonylgruppe pro Molekül,
**A2** 0,5 bis 20 %, vorzugsweise 1 bis 15 %, besonders bevorzugt 3 bis 12 % von α,β-olefinisch ungesättigten Carbonsäuren oder Halbestern von α,β-olefinisch ungesättigten Dicarbonsäuren mit linearen, verzweigten oder cyclischen Alkoholen mit 1 bis 15 Kohlenstoffatomen,
**A3** 20 bis 70 %, vorzugsweise 22 bis 60 %, besonders bevorzugt 24 bis 50 % von olefinisch ungesättigten Monomeren ausgewählt aus Vinylaromaten, n-Butylmethacrylat sowie Alkylestern von α,β-olefinisch ungesättigten Carbonsäuren oder Dialkylestern von α,β-olefinisch ungesättigten Dicarbonsäuren, wobei die Alkylgruppen ausgewählt sind aus linearen und verzweigten Alkylgruppen mit bis zu 3 Kohlenstoffatomen im Alkylrest und cyclischen und polycyclischen Alkylgruppen mit 5 bis 15 Kohlenstoffatomen in der Alkylgruppe,
**A4** 10 bis 60 %, vorzugsweise 15 bis 50 %, besonders bevorzugt 20 bis 45 % von Estern ausgewählt aus Alkylestern von α,β-olefinisch ungesättigten Carbonsäuren oder Dialkylestern von α,β-olefinisch ungesättigten Dicarbonsäuren,
   wobei die Alkylgruppen ausgewählt sind aus linearen und verzweigten Alkylgruppen mit mehr als 3 Kohlenstoffatomen im Alkylrest, mit der Ausnahme von n-Butylmethacrylat, und
**A5** 0 bis 25 %, vorzugsweise 2 bis 20 %, besonders bevorzugt 5 bis 15 % von anderen radikalisch polymerisierbaren Monomeren ausgewählt aus Vinylestern von aliphatischen gesättigten Carbonsäuren mit 2 bis 18 Kohlenstoffatomen, Hydroxyalkylestern, Nitrilen und Amiden von α,β-ungesättigten Carbonsäuren,
wobei die Summe der Massenanteile der Komponenten **A1** bis **A5** 100 % ergeben muß, und durch anschließende Zugabe einer zweiten Monomerenmischung **B** und weitere radikalisch initiierte Polymerisation dieser Monomerenmischung in der zweiten Stufe, wobei die Mischung **B** Massenanteile von
**B1** 30 bis 90 %, vorzugsweise 40 bis 80 %, besonders bevorzugt 50 bis 75 % von olefinisch ungesättigten Monomeren ausgewählt aus Vinylaromaten und n-Butylmethacrylat sowie Alkylestern von α,β-olefinisch ungesättigten Carbonsäuren oder Dialkylestern von α,β-olefinisch ungesättigten Dicarbonsäuren, wobei die Alkylgruppen ausgewählt sind aus linearen und verzweigten Alkylgruppen mit bis zu 3 Kohlenstoffatomen im Alkylrest und cyclischen und polycyclischen Alkylgruppen mit 5 bis 15 Kohlenstoffatomen in der Alkylgruppe,
**B2** 10 bis 60 %, vorzugsweise 20 bis 50 %, besonders bevorzugt 25 bis 40 % von Estern ausgewählt aus Alkylestern von α,β-olefinisch ungesättigten Carbonsäuren oder Dialkylestern von α,β-olefinisch ungesättigten Dicarbonsäuren, wobei die Alkylgruppen ausgewählt sind aus linearen und verzweigten Alkylgruppen mit mehr als 3 Kohlenstoffatomen im Alkylrest, mit der Ausnahme von n-Butylmethacrylat, und
**B3** 0 bis 40 %, vorzugsweise 5 bis 30 %, besonders bevorzugt 10 bis 25 % von anderen radikalisch polymerisierbaren Monomeren ausgewählt aus Vinylestern von aliphatischen gesättigten Carbonsäuren mit 2 bis 18 Kohlenstoffatomen, Hydroxyalkylestern, Nitrilen und Amiden von α,β-ungesättigten Carbonsäuren,
enthält, und wobei die Summe der Massenanteile der Komponenten **B1** bis **B3** 100 % ergeben muß, und das Verhältnis der Masse der Monomermischung **A** zur Masse der Monomermischung **B** 50 zu 50 bis 95 zu 5, bevorzugt 60 zu 40 bis 90 zu 10, beträgt,
dadurch gekennzeichnet, daß das Copolymerisat **AB** eine Kern-Schale-Struktur aufweist, und Monomere mit Carbonyl- und Carboxylgruppen nur in der Monomerenmischung aus **A1** bis **A5** der ersten Stufe, die zum Kern der Teilchen führt, enthalten sind, wobei die Stoffmenge der Carboxylgruppen in dem Copolymerisat **AB** stets geringer als die Stoffmenge der Carbonylgruppen ist, und das Stoffmengenverhältnis von Carboxylgruppen zu Carbonylgruppen ***n*** (-COOH) / ***n*** (>C=0) von 0,5 bis 0,95 mol/mol beträgt, und wobei anschließend Verbindungen **C** mit mindestens zwei Hydrazin- oder Hydrazidgruppen pro Molekül zugegeben werden, in einer Menge, daß das Verhältnis ***r*** der Summe der Stoffmenge an Hydrazingruppen ***n***(-NH-NH₂) und der Stoffmenge an Hydrazidgruppen ***n***(-CO-NH-NH₂) zur Stoffmenge der Carbonylgruppen ***n***(>CO) von 0,5 bis 1,1 mol/mol beträgt.

Die auf diese Weise erhältlichen Copolymerisate **AB** enthalten bevorzugt, bezogen auf die Masse des Feststoffes der Dispersion, 0,2 bis 1,7 mol/kg an Carbonylgruppen, und 0,15 bis 1,6 mol/kg Carboxylgruppen. Die Stoffmenge der Carboxylgruppen ist dabei stets geringer als die Stoffmenge der Carbonylgruppen; bevorzugt beträgt das Verhältnis der Stoffmenge der Carboxylgruppen ***n***(-COOH) zur Stoffmenge der Carbonylgruppen ***n***(>CO) 0,5 bis 0,95 mol/mol, besonders bevorzugt 0,75 bis 0,9 mol/mol.

Die erhaltenen Dispersionen der Copolymerisate **AB** werden anschließend an die Polymerisation durch Zugabe von Ammoniak, Aminen oder wäßrigen Alkalien neutralisiert, wobei die Zugabemenge der Neutralisationsmittel so bemessen wird, daß sie ausreicht, um 0 bis 120 % der vorhandenen Carboxylgruppen zu neutralisieren.

Zu der derart neutralisierten Dispersion werden anschließend Verbindungen **C** mit mindestens zwei Hydrazin- oder Hydrazidgruppen pro Molekül zugegeben, in einer Menge, daß das Verhältnis ***r*** der Summe der Stoffmenge an Hydrazingruppen ***n***(-NH-NH₂) und der Stoffmenge an Hydrazidgruppen ***n***(-CO-NH-NH₂) zur Stoffmenge der Carbonylgruppen ***n***(>CO) von 0,5 bis 1,1 mol/mol beträgt, bevorzugt zwischen 0,8 und 1,0 mol/mol.

Die Erfindung betrifft weiter ein Verfahren zur Herstellung der erfindungsgemäßen Copolymerisatdispersionen, wobei Wasser, das gegebenenfalls Emulgatoren enthält, vorgelegt und auf die gewünschte Reaktionstemperatur aufgeheizt wird, zu dieser Vorlage eine Mischung enthaltend Wasser, gegebenenfalls Emulgatoren, die Monomermischung **A** sowie einen radikalischen Polymerisationsinitiator, zudosiert wird, die Polymerisation solange durchgeführt wird, bis mindestens 95 % der Monomeren reagiert haben, sodann eine zweite Mischung enthaltend Wasser, gegebenenfalls Emulgatoren sowie die Monomermischung **B** und einen weiteren radikalisch wirkenden Polymerisationsinitiator zudosiert wird und die Polymerisation anschließend solange durchführt, bis der Gehalt an Restmonomeren unter 1 % gesunken ist. Die erhaltene Dispersion wird abgekühlt und unter Rühren mit dem Neutralisationsmittel, vorzugsweise in Form einer wäßrigen Lösung, versetzt. Zu der neutralisierten Dispersion des Copolymerisats **AB** wird anschließend die Hydrazin- bzw. Hydrazidverbindung **C** unter Rühren hinzugefügt, wodurch die selbstvemetzende Dispersion **ABC** gebildet wird.

Die Erfindung betrifft schließlich auch die Verwendung dieser Dispersionen als Bindemittel für lagerstabile Einkomponentenlacke, die bei Raumtemperatur oder bei erhöhter Temperatur vernetzen.

Die gegebenenfalls zur Neutralisation verwendeten Amine oder Alkalien verbessern die Stabilität der wäßrigen Copolymerisatdispersionen.

Als Monomerenkomponente **A1** werden Carbonylgruppen aufweisende olefinisch ungesättigte Monomere eingesetzt. Bevorzugt werden lineare, verzweigte und cyclische aliphatische Verbindungen mit 4 bis 20 Kohlenstoffatomen, eingesetzt, die jeweils mindestens eine Carbonylgruppe und eine äthylenische Doppelbindung enthalten. In untergeordnetem Maß (bis zu 10 % der Masse der Monomeren **A1**) können auch Verbindungen mit zwei oder mehreren polymerisierbaren Doppelbindungen eingesetzt werden, dies führt zu einer Vernetzung des Copolymerisats. Besonders bevorzugt werden α,β-olefinisch ungesättigte Monomere wie N-Diaceton(meth)acrylamid und (Meth)acrylsäureacetoacetoxyalkylester, deren Alkylengruppe ausgewählt ist aus 1,2-Äthylen-, 1,2- und 1,3-Propylen-, 1,4-Butylenund 1,6-Hexylen- sowie 1,5-(3-Oxa)pentylen- und 1,8-(3,6-Dioxa)octylen-Gruppen, insbesondere der Äthylester verwendet.

Die Monomeren **A2** sind bevorzugt α,β-ungesättigte Carbonsäuren mit 3 bis 4 Kohlenstoffatomen, wie Acrylsäure, Methacrylsäure, Croton- und Isocrotonsäure sowie Vinylessigsäure. Auch Halbester von α,β-ungesättigten Dicarbonsäuren mit linearen, verzweigten oder cyclische Alkoholen mit 1 bis 15 Kohlenstoffatomen lassen sich einsetzen, wobei die Dicarbonsäuren bevorzugt 4 bis 6 Kohlenstoffatome aufweisen. Bevorzugt werden Monomethyl- und Monoäthylester von Maleinsäure, Fumarsäure, sowie Citracon-, Mesacon-, Itacon- und Glutaconsäure.

Unter den Monomeren **A3** sind bevorzugt die Ester von Methanol, Äthanol, n- und isoPropanol mit Acryl- und Methacrylsäure sowie die Diester der genannten Alkohole mit den unter **A2** genannten Dicarbonsäuren, weiter das n-Butylmethacrylat sowie unter den Vinylaromaten besonders Styrol, p-Methylstyrol und die als "Vinyltoluol" bezeichnete Iosmerenmischung. Besonders bevorzugt werden Methyl- und Äthyl(meth)acrylat, n-Butylmethacrylat, Styrol sowie Dimethylmaleinat.

Als Monomere **A4** werden bevorzugt eingesetzt die Ester von n-, sek. und tert. Butanol, den isomeren Pentanolen und den höheren Alkoholen wie n-Hexanol und 2-Äthylhexylalkohol mit α,β-ungesättigte Carbonsäuren ausgewählt aus Acryl- und Methacrylsäure, Vinylessigsäure, Malein- und Fumarsäure, wobei bei den genannten Dicarbonsäuren die Diester verwendet werden, und wobei das n-Butylmethacrylat ausgenommen ist.

Als Monomerenkomponente **A5** seien beispielsweise für die Hydroxyalkylester von olefinisch ungesättigten Carbonsäuren Hydroxyäthyl- und 2-Hydroxypropyl(meth)acrylat, (Meth)Acrylnitril, (Meth)Acrylamid und für die Vinylester Vinylacetat genannt.

In der zweiten Stufe wird durch Zugabe der Monomerenmischung **B** und gegebenenfalls neuer Initiatoren ein Polymerisat mit einer abweichenden chemischen Struktur erzeugt.

Die Monomeren **B1** entsprechen den unter **A3** genannten, die Monomeren **B2** entsprechen den unter **A4** genannten, und die Monomeren **B3** schließlich entsprechen den unter **A5** genannten. Die Monomerenmischung **B** ist mithin frei von Verbindungen mit funktionellen Gruppen ausgewählt aus Carbonyl- und Carboxylgruppen.

Die Verbindungen **C** mit Hydrazin- bzw. Hydrazid-Funktionalität enthalten zwei oder mehrere Hydrazin- oder Hydrazidgruppen und weisen vorzugsweise eine mittlere molare Masse (Mₙ) von unter 1000 g/mol auf. Beispiele für solche Verbindungen sind Bishydrazide von Dicarbonsäuren mit 2 bis 12 C-Atomen wie die Bishydrazide der Oxalsäure, Malonsäure, Bernsteinsäure, Glutarsäure, Adipinsäure, Pimelinsäure, Korksäure, Azelainsäure, Sebacinsäure oder der isomeren Phthalsäuren; Kohlensäurebishydrazid, Alkylen- oder Cycloalkylen-bis-semicarbazide, N,N'-Diaminoguanidin, Alkylenbishydrazine wie N,N'-Diamino-piperazin, Arylenbishydrazine wie Phenylen- oder Naphthylenbishydrazin sowie Alkylenbissemicarbazide.

Verbindungen **C** mit höherer Funktionalität sind beispielsweise die Hydrazide der Nitrilotriessigsäure oder der Äthylendiamintetraessigsäure.

Die erfindungsgemäßen Copolymerisatdispersionen haben eine ausgezeichnete Lagerstabilität und ergeben Filme mit guten Beständigkeitseigenschaften. Sie können als Bindemittel für Industrielacke und Grundierungen eingesetzt werden. Weiters lassen sich mit ihnen Klarlacke formulieren, die zur Beschichtung von Holz, Kunststoff, Leder oder Papier verwendet werden können.

Die Vernetzung der Copolymerisatdispersionen erfolgt durch Umsetzung der Hydrazin- bzw. Hydrazid-Gruppen der Verbindungen **C** mit den Carbonylgruppen der Copolymerisatdispersionen **AB** bereits bei Raumtemperatur nach dem Abdunsten eines wesentlichen Anteils des Wassers.

Die Formulierung von wasserverdünnbaren Lacken unter Verwendung der erfindungsgemäß hergestellten Bindemittel und die Applikation derartiger Lacke sind dem Fachmann bekannt.

Die folgenden Beispiele erläutern die Erfindung, ohne sie in ihrem Umfang zu beschränken. In den nachfolgenden Beispielen bedeuten ebenso wie im vorhergehenden Text alle Angaben mit der Einheit "%", Massenanteile, soweit nicht anders angegeben. "Teile" (abgekürzt "Tle") sind stets Massenteile. Konzentrationsangaben in "%" sind Massenanteile des gelösten Stoffes in der Lösung (in g/(100 g)).

### Beispiele

### Beispiel 1

In einem für die Emulsionscopolymerisation geeigneten Reaktor mit Rückflußkühler, Thermometer und zwei Zulaufgefäßen wurde eine Mischung aus 360 Tlen demineralisiertem Wasser, 24 Tlen ®Triton X 200 (Natriumalkylarylpolyäthersulfonat, Hersteller: Rohm & Haas, USA) und 5,4 Tlen ®Triton X 165 (Octylphenoläthoxylat, Hersteller: Rohm & Haas, USA) unter Rühren homogenisiert.

Das Zulaufgefäß A wurde mit einer homogenen Emulsion, bestehend aus 1150 Tlen demineralisiertem Wasser, 24 Tlen Triton X 200, 10 Tlen Triton X 165, 3,2 Tlen Ammoniumperoxodisulfat, 165 Tlen n-Butylmethacrylat, 280 Tlen n-Butylacrylat, 275 Tlen Styrol, 140 Tlen Acetoacetoxyäthylmethacrylat und 40 Tlen Methacrylsäure beschickt. 5 % dieser Voremulsion wurden in den Reaktor abgelassen. Der Reaktorinhalt wurde unter Rühren auf 85 °C erwärmt und 10 Minuten bei dieser Temperatur gehalten. Sodann wurde der verbleibende Inhalt des Zulaufgefäßes A während 120 min bei 85 °C gleichmäßig in den Reaktor dosiert.

Anschließend wurde aus dem Zulaufgefäß B eine homogene Emulsion aus 100 Tlen demineralisiertem Wasser, 3,1 Tlen Triton X 200, 2,4 Tlen Triton X 165, 30 Tlen Butylacrylat, 70 Tlen Styrol und 0,8 Tlen Ammoniumperoxodisulfat während 30 min bei 85 °C zudosiert. Nach Zulaufende wurde der Reaktorinhalt auf 88 °C erwärmt und 120 min bei dieser Temperatur gehalten. Schließlich wurde auf 25 °C gekühlt und durch Zusatz von einer 10 %igen wäßrige Ammoniaklösung auf einen pH-Wert von 5,5 gestellt Danach wurden innerhalb von 30 Minuten 51,2 Tle Adipinsäure-Dihydrazid zugegeben. Man erhielt eine opaleszierende Dispersion mit einem Festkörper-Massenanteil von 38,8 % und einer mittleren Teilchengröße von 105 nm. Der pH-Wert betrug 5,5.

### Beispiele 2 bis 7

Es wurde analog zu Beispiel 1 verfahren. Die Zusammensetzungen der Reaktorvorlagen und der Zuläufe, sowie geänderte Polymerisationsparameter sind der Tabelle 1 zu entnehmen, in der folgende Abkürzungen verwendet werden:

| | | | |
|---|---|---|---|
| ADH | Adipinsäure-Dihydrazid | HBA | 4-Hydroxybutylacrylat |
| ODH | Oxalsäure-Dihydrazid | HEMA | 2-Hydroxyäthylmethacrylat |
| AAEMA | Acetoacetoxyäthylmethacrylat | MS | Methacrylsäure |
| | | pMST | p-Methylstyrol |
| APS | Ammoniumperoxodisulfat | NH₃ | Ammoniak |
| AS | Acrylsäure | ST | Styrol |
| BA | Butylacrylat | X 165 | ®Triton X 165 (Rohm & |
| BMA | Butylmethacrylat | | Haas, USA) |
| BV | ®Hostapal BV conc. | X 200 | ®Triton X 200 (Rohm & |
| | (Clariant GmbH, DE) | | Haas, USA) |
| DAA | Diacetonacrylamid | X 305 | ®Triton X 305 (Rohm & |
| DBF | Dibutylfumarat | | Haas, USA) |
| DMEA | Dimethyläthanolamin | | (Alkylarylpolyätheralkohol) |
| DW | Demineralisiertes Wasser | | |
| EHA | 2-Äthylhexylacrylat | | |

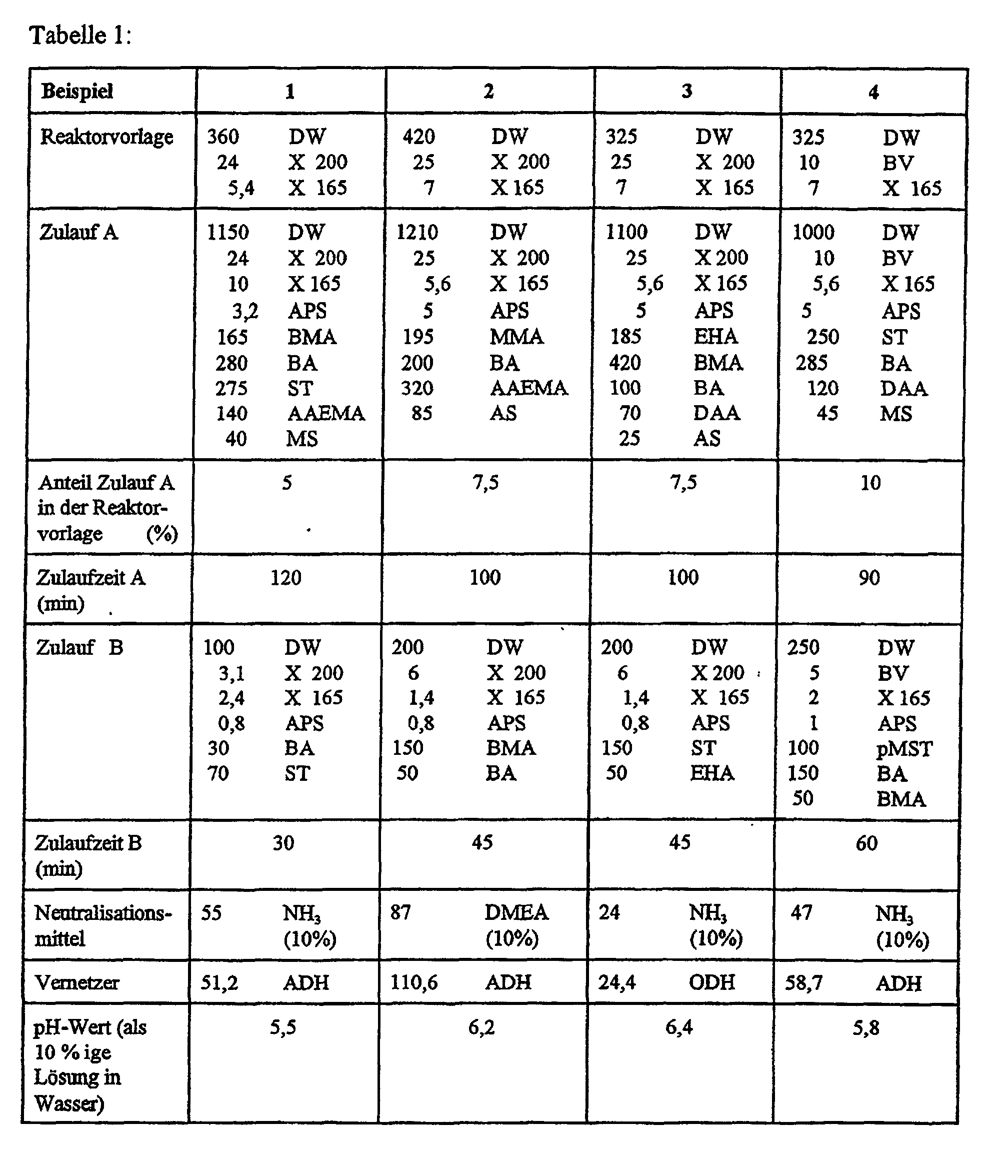

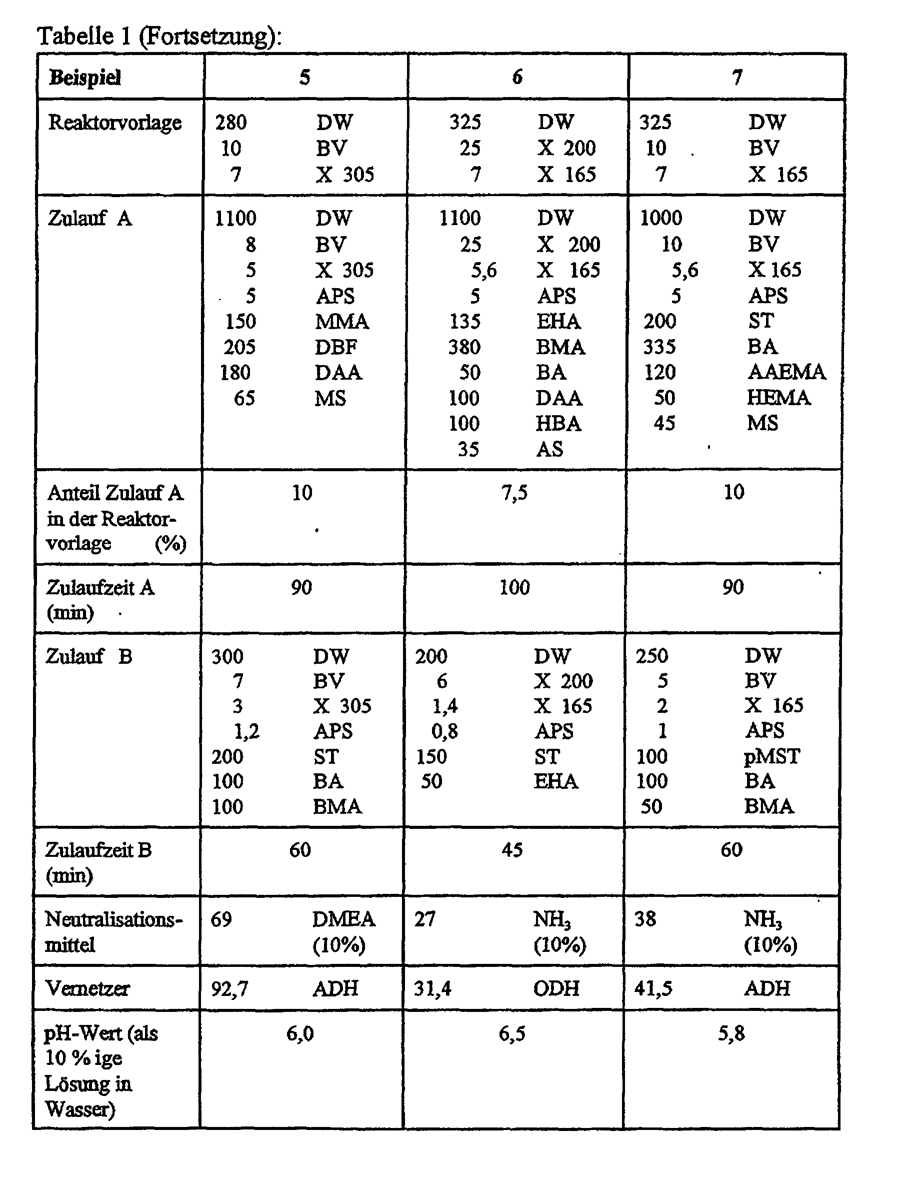

**Tabelle 2:**

| **Beispiel** | **1** | **2** | **3** | **4** | **5** | **6** | **7** | **V1** |
|---|---|---|---|---|---|---|---|---|
| Feststoffgehalt in % | 38,7 | 37,5 | 38,3 | 40,0 | 39,1 | 38,5 | 38,5 | 38,8 |
| pH-Wert | 5,5 | 6,2 | 6,4 | 5,8 | 6,0 | 6,5 | 5,8 | 7,9 |
| mittlere Teilchengröße in nm | 105 | 100 | 115 | 100 | 95 | 105 | 100 | 90 |
| ***n***(>CO)/***m***⁽¹⁾ in mol/kg | 0,65 | 1,5 | 0,41 | 0,71 | 1,07 | 0,59 | 0,56 | 0,65 |
| ***n***(-COOH)/***m***⁽²⁾ in mol/kg | 0,47 | 1,18 | 0,35 | 0,52 | 0,76 | 0,49 | 0,52 | 0,47 |
| ***n***(-COOH)/***n***(>CO)⁽³⁾ in mol/mol | 0,72 | 0,79 | 0,85 | 0,73 | 0,71 | 0,83 | 0,93 | 0,72 |
| ***r***⁽⁴⁾ in mol/mol | 0,90 | 0,85 | 1,00 | 0,95 | 1,00 | 0,90 | 0,85 | 0,95 |

| | | | | | | | | |
|---|---|---|---|---|---|---|---|---|
| (1) spezifischer Gehalt an Carbonylgruppen in mol/kg | | | | | | | | |
| (2) spezifischer Gehalt an Carboxylgruppen in mol/kg | | | | | | | | |
| (3) Stoffmengenverhältnis ***n***(-COOH)/***n***(>CO) in mol/mol | | | | | | | | |
| (4) Stoffmengenverhältnis ***r*** = (***n***(-NH-NH₂) *+****n*** (-CO-NH-NH₂)) / ***n***(>CO) in mol/mol V1 Beispiel aus AT-B 402 504 | | | | | | | | |

### Lacktechnische Prüfung in Klarlacken

Die Klarlacke 1 bis 5 und V1 wurden hergestellt durch Mischen einer solchen Menge der Hydrazid-haltigen Copolymerisat-Dispersion, daß die darin enthaltene Masse an Feststoff 100 g betrug, 0,8 g eines handelsüblichen Entschäumungsmittels, 0,2 g eines handelsüblichen Verlaufsmittels, und soviel deionisiertem Wasser, daß eine Auslaufzeit gemäß DIN 53 211 bei 23 °C von 25 Sekunden erreicht wird. Die Ergebnisse der lacktechnischen Prüfungen sind in Tabelle 3 zusammengefaßt:

**Tabelle 3**

| Klarlack | 1 | 2 | 3 | 4 | 5 | V₁ | V₂ |
|---|---|---|---|---|---|---|---|
| Klebfreiheit in Minuten | 15 | 15 | 15 | 15 | 15 | 15 | 50 |
| Schleifbarkeit | 0 | 0 | 0 | 0 | 0 | 0 | MIN |
| Pendelhärte in s | 72 | 75 | 82 | 73 | 68 | 80 | 50 |
| Acetonbeständigkeit in s | >60 | >60 | >60 | >60 | >60 | >60 | >60 |
| Äthanolbeständigkeit in h | 5 | 4 | 4 | 5 | 4 | 5 | >8 |
| Wasserbeständigkeit in h | >48 | >36 | >48 | >36 | >36 | >24 | >48 |
| Gelbverfärbung | 1 | 1-2 | 1 | 1 | 1-2 | 4 | 1-2 |
| Pot life (Lagerstabilität) | >3 Mo | >3 Mo | >3 Mo | >3 Mo | >3 Mo | >3 Mo | 20 Std |

| | | | | | | | |
|---|---|---|---|---|---|---|---|
| V1 Beispiel 1 aus AT-B 402 504, s.o. | | | | | | | |
| V2 Klarlack gemäß AT-B 403 478 | | | | | | | |

### Klebfreiheit: Drying Recorder, Glasstreifen, Auftragen eines Lackfilmes mit 150 µm Naßfilm-Schichtstärke, bei 20 °C (Angabe der Zeit in Minuten, bis eine klebfreie Oberfläche erreicht ist)

Schleifbarkeit: furniertes Holz, Auftragen eines Lackfilmes mit 150 µm Naßfilm-Schichtstärke; geprüft wurde das Untersetzen von Schleifpapier (Körnung 320) nach 10 Hüben nach einer Trocknungszeit von 60 Minuten bei Raumtemperatur. Das Untersetzen des Schleifpapieres ist eine Praxisprüfung des Anwenders (Parkett-Verleger, Möbeltischler). Gemeint ist das Festhaften von frisch applizierten Lackfilmen auf dem Schleifpapier beim Zwischenschliff vor Applikation einer weiteren Lackschicht.
Optimal ist Kennwert 0 (kein Untersetzen), akzeptiert wird noch Kennwert MIN (Festhaftungen auf weniger als 10 % der Schleifpapierfläche).

Pendelhärte nach KÖNIG (DIN 53157): Glasplatten, Auftragen eines Lackfilmes mit 120 µm Naßfilm-Schichtstärke, Trocknungszeit von 24 Stunden bei 20 °C

Beständigkeiten gegen Aceton, Äthanol und Wasser: Glasplatten, Auftragen eines Lackfilmes mit 120 µm Naßfilm-Schichtstärke, Trocknungszeit von 24 Stunden bei 20 °C Ein mit dem Lösungsmittel getränkter Wattebausch wurde auf den Lackfilm aufgelegt und mit einem Becherglas abgedeckt. Die Zeit bis zur Erweichung des Films wurde gemessen.

Potlife: Der Zweikomponenten lack wird stündlich umgerührt. Dieser Vorgang wird so lange wiederholt, bis die Gelierung einsetzt.

Gelbverfärbung: 200 µm Naßfilm-Schichtstärke auf Ahorn (furniert). Die Beurteilung erfolgt nach einer Lagerung während 4 Wochen bei Raumtemperatur (1= keine merkbare Verfärbung, 5 = sehr starke Verfärbung).

## Patentansprüche

1. Wäßrige, selbstvernetzende Copolymerisatdispersionen **ABC**, erhältlich durch radikalisch initiierte Copolymerisation in der ersten Stufe von einer Monomerenmischung **A** enthaltend Massenanteile in der Mischung von
**A1** 2 bis 55 % olefinisch ungesättigten Monomeren mit jeweils mindestens einer Carbonylgruppe pro Molekül,
**A2** 0,5 bis 20 % von α,β-olefinisch ungesättigten Carbonsäuren oder Halbestern von α,β-olefinisch ungesättigten Dicarbonsäuren mit linearen, verzweigten oder cyclischen Alkoholen mit 1 bis 15 Kohlenstoffatomen,
**A3** 20 bis 70 % von olefinisch ungesättigten Monomeren ausgewählt aus Vinylaromaten, n-Butylmethacrylat sowie Alkylestern von α,β-olefinisch ungesättigten Carbonsäuren oder Dialkylestern von α,β-olefinisch ungesättigten Dicarbonsäuren, wobei die Alkylgruppen ausgewählt sind aus linearen und verzweigten Alkylgruppen mit bis zu 3 Kohlenstoffatomen im Alkylrest und cyclischen und polycyclischen Alkylgruppen mit 5 bis 15 Kohlenstoffatomen in der Alkylgruppe,
**A4** 10 bis 60 % von Estern ausgewählt aus Alkylestern von α,β-olefinisch ungesättigten Carbonsäuren oder Dialkylestern von α,β-olefinisch ungesättigten Dicarbonsäuren, wobei die Alkylgruppen ausgewählt sind aus linearen und verzweigten Alkylgruppen mit mehr als 3 Kohlenstoffatomen im Alkylrest, mit der Ausnahme von n-Butylmethacrylat, und
**A5** 0 bis 25 % von anderen radikalisch polymerisierbaren Monomeren ausgewählt aus Vinylestern von aliphatischen gesättigten Carbonsäuren mit 2 bis 18 Kohlenstoffatomen, Hydroxyalkylestern, Nitrilen und Amiden von a,β-ungesättigten Carbonsäuren,
wobei die Summe der Massenanteile der Komponenten **A1** bis **A5** 100 % ergeben muß, und durch anschließende Zugabe einer zweiten Monomerenmischung **B** und weitere radikalisch initiierte Polymerisation dieser Monomerenmischung in der zweiten Stufe, wobei die Mischung **B** Massenanteile von
**B1** 30 bis 90 % von olefinisch ungesättigten Monomeren ausgewählt aus Vinylaromaten und n-Butylmethacrylat sowie Alkylestern von α,β-olefinisch ungesättigten Carbonsäuren oder Dialkylestern von α,β-olefinisch ungesättigten Dicarbonsäuren, wobei die Alkylgruppen ausgewählt sind aus linearen und verzweigten Alkylgruppen mit bis zu 3 Kohlenstoffatomen im Alkylrest und cyclischen und polycyclischen Alkylgruppen mit 5 bis 15 Kohlenstoffatomen in der Alkylgruppe,
**B2** 10 bis 60 % von Estern ausgewählt aus Alkylestern von α,β-olefinisch ungesättigten Carbonsäuren oder Dialkylestern von α,β-olefinisch ungesättigten Dicarbonsäuren, wobei die Alkylgruppen ausgewählt sind aus linearen und verzweigten Alkylgruppen mit mehr als 3 Kohlenstoffatomen im Alkylrest, mit der Ausnahme von n-Butylmethacrylat, und
**B3** 0 bis 40 % von anderen radikalisch polymerisierbaren Monomeren ausgewählt aus Vinylestern von aliphatischen gesättigten Carbonsäuren mit 2 bis 18 Kohlenstoffatomen, Hydroxyalkylestern, Nitrilen und Amiden von α,β-ungesättigten Carbonsäuren,
enthält, wobei die Summe der Massenanteile der Komponenten **B1** bis **B3** 100 % ergeben muß, und das Verhältnis der Masse der Monomermischung A zur Masse der Monomermischung **B** 50 zu 50 bis 95 zu 5 beträgt,
**dadurch gekennzeichnet, daß**
das Copolymerisat **AB** eine Kern-Schale-Struktur aufweist, und Monomere mit Carbonyl- und Carboxylgruppen nur in der Monomerenmischung aus **A1** bis **A5** der ersten Stufe, die zum Kern der Teilchen führt, enthalten sind, wobei die Stoffmenge der Carboxylgruppen in dem Copolymerisat **AB** stets geringer als die Stoffinenge der Carbonylgruppen ist, und das Stoffmengenverhältnis von Carboxylgruppen zu Carbonylgruppen ***n*** (-COOH) / ***n*** (>C=O) von 0,5 bis 0,95 mol/mol beträgt, und wobei anschließend Verbindungen **C** mit mindestens zwei Hydrazin- oder Hydrazidgruppen pro Molekül zugegeben werden, in einer Menge, daß das Verhältnis ***r*** der Summe der Stoffmenge an Hydrazingruppen ***n***(-CO-NH-NH₂) und der Stoffmenge an Hydrazidgruppen ***n***(-CO-NH-NH₂) zur Stoffmenge der Carbonylgruppen ***n***(>CO) von 0,5 bis 1,1 mol/mol beträgt.

2. Wäßrige, selbstvernetzende Copolymerisatdispersionen **ABC** nach Anspruch 1, **dadurch gekennzeichnet, daß** der Gehalt an Carbonylgruppen 0,2 bis 1,7 mol/kg und der Gehalt an Carboxylgruppen 0,15 bis 1,6 mol/kg beträgt, jeweils bezogen auf die Masse des Feststoffes der Dispersion.

3. Wäßrige, selbstvernetzende Copolymerisatdispersionen **ABC** nach Anspruch 1, **dadurch gekennzeichnet, daß** bis zu 10 % der Masse der Monomeren gemäß **A1** zwei oder mehrere polymerisierbare Doppelbindungen aufweisen.

4. Wäßrige, selbstvernetzende Copolymerisatdispersionen **ABC** nach Anspruch 1, **dadurch gekennzeichnet, daß** die Monomeren gemäß **A1** ausgewählt sind aus Diaceton(meth)acrylamid und (Meth)acrylsäure-acetoacetoxyalkylestern, deren Alkylengruppe ausgewählt ist aus 1,2-Äthylen-, 1,2- und 1,3-Propylen-, 1,4-Butylenund 1,6-Hexylen- sowie 1,5-(3-Oxa)pentylen- und 1,8-(3,5-Dioxa)octylen-Gruppen.

5. Wäßrige, selbstvernetzende Copolymerisatdispersionen **ABC** nach Anspruch 1, **dadurch gekennzeichnet, daß** die Monomeren gemäß **A2** ausgewählt sind aus Acryl- und Methacrylsäure.

6. Wäßrige, selbstvernetzende Copolymerisatdispersionen **ABC** nach Anspruch 1, **dadurch gekennzeichnet, daß** die Monomeren gemäß **A3** und gemäß **B1** unabhängig voneinander ausgewählt sind aus Methyl- und Äthyl-(Meth)acrylat und Dimethylmaleinat.

7. Wäßrige, selbstvemetzende Copolymerisatdispersionen **ABC** nach Anspruch 1, **dadurch gekennzeichnet, daß** die Monomeren gemäß **A4** und gemäß **B2** unabhängig voneinander ausgewählt sind aus den Acryl- und Methacryl-säureestern von n-, sek.- und iso-Butanol, n-Hexanol und 2-Äthylhexanol.

8. Wäßrige, selbstvernetzende Copolymerisatdispersionen **ABC** nach Anspruch 1, **dadurch gekennzeichnet, daß** die Monomeren gemäß **A5** und gemäß **B3** unabhängig voneinander ausgewählt sind aus Styrol, Vinyltoluol, p-Methylstyrol und Vinylacetat.

9. Wäßrige, selbstvernetzende Copolymerisatdispersionen **ABC** nach Anspruch 1, **dadurch gekennzeichnet, daß** die Verbindungen **C** ausgewählt sind aus Oxalsäureund Adipinsäure-Dihydrazid und Diaminopiperazin.

10. Verfahren zur Herstellung von wäßrigen, selbstvernetzenden Copolymerisatdispersionen **ABC** nach Anspruch 1, **dadurch gekennzeichnet, daß** in der ersten Stufe eine radikalisch initiierte Copolymerisation der Monomer-Mischung **A** durchgeführt wird, anschließend durch Zusatz einer zweiten Monomeremischung **B** und gegebenenfalls weiteren Polymerisationsinitiators ein zweiter Polymerisationsschritt ausgelöst wird, und zu der erhaltenen wäßrigen Dispersion gegebenenfalls nach mindestens teilweiser Neutralisation eine Verbindung **C** mit mindestens zwei funktionellen Gruppen ausgewählt aus Hydrazin- und Hydrazid-Gruppen zugegeben wird.

11. Bindemittel für Einkomponenten-Lacke, enthaltend Copolymerisat-Dispersionen nach Anspruch 1.

## Claims

1. Aqueous self-crosslinking copolymer dispersions **ABC** obtainable by free-radically initiated copolymerization in the first stage of a monomer mixture **A** comprising mass fractions in the mixture of
**A1** from 2 to 55% of olefinically unsaturated monomers having in each case at least one carbonyl group per molecule,
**A2** from 0.5 to 20% of α,β-olefinically unsaturated carboxylic acids or monoesters of α,β-olefinically unsaturated dicarboxylic acids with linear, branched or cyclic alcohols having 1 to 15 carbon atoms,
**A3** from 20 to 70% of olefinically unsaturated monomers selected from vinylaromatic compounds, n-butyl methacrylate and also alkyl esters of α,β-olefinically unsaturated carboxylic acids or dialkyl esters of α,β-olefinically unsaturated dicarboxylic acids, the alkyl groups being selected from linear and branched alkyl groups having up to 3 carbon atoms in the alkyl radical and cyclic and polycyclic alkyl groups having 5 to 15 carbon atoms in the alkyl group,
**A4** from 10 to 60% by weight of esters selected from alkyl esters of α,β-olefinically unsaturated carboxylic acids or dialkyl esters of α,β-olefinically unsaturated dicarboxylic acids, the alkyl groups being selected from linear and branched alkyl groups having more than 3 carbon atoms in the alkyl radical, with the exception of n-butyl methacrylate, and
**A5** from 0 to 25% of other free-radically polymerizable monomers selected from vinyl esters of aliphatic saturated carboxylic acids having 2 to 18 carbon atoms, hydroxyalkyl esters, nitriles and amides of α,β-unsaturated carboxylic acids,
the sum of the mass fractions of components **A1** to **A5** necessarily being 100%, and by subsequent addition of a second monomer mixture **B** and further free-radically initiated polymerization of this monomer mixture in the second stage, the mixture **B** comprising mass fractions of
**B1** from 30 to 90% of olefinically unsaturated monomers selected from vinylaromatic compounds, n-butyl methacrylate and also alkyl esters of α,β-olefinically unsaturated carboxylic acids or dialkyl esters of α,β-olefinically unsaturated dicarboxylic acids, the alkyl groups being selected from linear and branched alkyl groups having up to 3 carbon atoms in the alkyl radical and cyclic and polycyclic alkyl groups having 5 to 15 carbon atoms in the alkyl group,
**B2** from 10 to 60% of esters selected from alkyl esters of α,β-olefinically unsaturated carboxylic acids or dialkyl esters of α,β-olefinically unsaturated dicarboxylic acids, the alkyl groups being selected from linear and branched alkyl groups having more than 3 carbon atoms in the alkyl radical, with the exception of n-butyl methacrylate, and
**B3** from 0 to 40% of other free-radically polymerizable monomers selected from vinyl esters of aliphatic saturated carboxylic acids having 2 to 18 carbon atoms, hydroxyalkyl esters, nitriles and amides of α,β-unsaturated carboxylic acids,
the sum of the mass fractions of components **B1** to **B3** necessarily being 100%, and the ratio of the mass of the monomer mixture **A** to the mass of the monomer mixture **B** is from 50:50 to 95:5, **characterized in that** the copolymer **AB** has a core-shell structure, and monomers having carbonyl and carboxyl groups are present only in the monomer mixture of **A1** to **A5** of the first stage, which leads to the core of the particles, the molar amount of the carboxyl groups in the copolymer **AB** always being lower than the molar amount of the carbonyl groups, and the molar ratio of carboxyl groups by carbonyl groups n (-COOH) / **n** (>C=O) being from 0.5 to 0.95 mol/mol, and subsequently the compounds **C** having at least two hydrazine or hydrazide groups per molecule being added in an amount such that the ratio **r** of the sum of the molar amount of hydrazine groups ***n***(-NH-NH₂) and the molar amount of hydrazide groups ***n***(-CO-NH-NH₂) to the molar amount of the carbonyl groups ***n***(>CO) is from 0.5 to 1.1 mol/mol.

2. Aqueous self-crosslinking copolymer dispersions **ABC** according to Claim 1, **characterized in that** the carbonyl group content is from 0.2 to 1.7 mol/g and the carboxyl group content is from 0.15 to 1.6 mol/kg, based in each case on the mass of the solids of the dispersion.

3. Aqueous self-crosslinking copolymer dispersions **ABC** according to Claim 1, **characterized in that** up to 10% of the mass of the monomers of **A1** have 2 or more polymerizable double bonds.

4. Aqueous self-crosslinking copolymer dispersions **ABC** according to Claim 1, **characterized in that** the monomers of **A1** are selected from diacetone(meth)acrylamide and (meth)acrylic acid acetoacetoxyalkyl esters whose alkylene group is selected from 1,2-ethylene, 1,2- and 1,3-propylene, 1,4-butylene and 1,6-hexylene and also 1,5-(3-oxa)pentylene and 1,8-(3,5-dioxa)octylene groups.

5. Aqueous self-crosslinking copolymer dispersions **ABC** according to Claim 1, **characterized in that** the monomers of **A2** are selected from acrylic acid and methacrylic acid.

6. Aqueous self-crosslinking copolymer dispersions **ABC** according to Claim 1, **characterized in that** the monomers of **A3** and of **B1** independently of one another are selected from methyl and ethyl (meth)acrylate and dimethyl maleate.

7. Aqueous self-crosslinking copolymer dispersions **ABC** according to Claim 1, **characterized in that** the monomers of **A4** and of **B2** independently of one another are selected from the acrylic and methacrylic esters of n-, sec- and isobutanol, n-hexanol and 2-ethylhexanol.

8. Aqueous self-crosslinking copolymer dispersions **ABC** according to Claim 1, **characterized in that** the monomers of **A5** and of **B3** independently of one another are selected from styrene, vinyltoluene, p-methylstyrene and vinyl acetate.

9. Aqueous self-crosslinking copolymer dispersions **ABC** according to Claim 1, **characterized in that** the compounds **C** are selected from oxalic and adipic dihydrazide and diaminopiperazine.

10. Process for preparing aqueous self-crosslinking copolymer dispersions **ABC** according to Claim 1,
**characterized in that** it comprises in the first stage conducting a free-radically initiated copolymerization of the monomer mixture **A**, subsequently initiating a second polymerization step by adding a first monomer mixture **B** with or without further polymerization initiator, and adding to the resultant aqueous dispersion, directly or following at least partial neutralization, a compound **C** having at least two functional groups selected from hydrazine and hydrazide groups.

11. Binder for one-component coating materials, comprising copolymer dispersions according to Claim 1.

## Revendications

1. Dispersions aqueuses de copolymère ABC autodurcissables, qu'on peut obtenir par les opérations consistant à copolymériser par voie radicalaire dans la première étape un mélange de monomères **A** contenant dans le mélange des proportions en masse de
A1 2 à 55 % de monomères oléfiniquement insaturés ayant respectivement au moins un groupe carbonyle par molécule,
A2 0,5 à 20 % d'acides carboxyliques oléfiniquement α,β-insaturés ou d'hémi-esters d'acides dicarboxyliques oléfiniquement α,β-insaturés avec des alcools linéaires, ramifiés ou cycliques ayant de 1 à 15 atomes de carbone,
A3 20 à 70 % de monomères oléfiniquement insaturés choisis parmi les composés aromatiques de vinyle, le méthacrylate de n-butyle et les esters d'alkyle d'acides carboxyliques oléfiniquement α,β-insaturés ou les esters de dialkyle d'acides dicarboxyliques oléfiniquement α,β-insaturés, dans lesquels les groupes alkyle sont choisis parmi les groupes alkyle linéaires et ramifiés ayant jusqu'à 3 atomes de carbone dans le groupe alkyle et les groupes alkyle cycliques et polycycliques ayant de 5 à 15 atomes de carbone dans le groupe alkyle,
A4 10 à 60 % d'esters choisis parmi les esters d'alkyle d'acides carboxyliques oléfiniquement α,β-insaturés ou les esters de dialkyle d'acides dicarboxyliques oléfiniquement α,β-insaturés, dans lesquels les groupes alkyle sont choisis parmi les groupes alkyle linéaires et ramifiés ayant plus de 3 atomes de carbone dans le groupe alkyle, à l'exception du méthacrylate de n-butyle, et
A5 0 à 25 % d'autres monomères polymérisables par voie radicalaire choisis parmi les esters de vinyle d'acides carboxyliques saturés aliphatiques ayant de 2 à 18 atomes de carbone, les esters d'hydroxyalkyle, les nitriles et les amides d'acides carboxyliques α,β-insaturés,
dans lesquels la somme des proportions en masse des composants A1 à A5 doit être égale à 100 %, et à ajouter ensuite un deuxième mélange de monomères **B** et à continuer à polymériser ce mélange de monomères par voie radicalaire dans la deuxième étape, dans laquelle le mélange **B** contient les proportions en masse de
B1 30 à 90 % de monomères oléfiniquement insaturés choisis parmi les composés aromatiques de vinyle et le méthacrylate de n-butyle et les esters d'alkyle d'acides carboxyliques oléfiniquement α,β-insaturés ou les esters de dialkyle d'acides dicarboxyliques oléfiniquement α,β-insaturés, dans lesquels les groupes alkyle sont choisis parmi les groupes alkyle linéaires et ramifiés ayant jusqu'à 3 atomes de carbone dans le groupe alkyle et les groupes alkyle cycliques et polycycliques ayant de 5 à 15 atomes de carbone dans le groupe alkyle,
B2 10 à 60 % d'esters choisis parmi les esters d'alkyle d'acides carboxyliques oléfiniquement α,β-insaturés ou les esters de dialkyle d'acides dicarboxyliques oléfiniquement α,β-insaturés, dans lesquels les groupes alkyle sont choisis parmi les groupes alkyle linéaires et ramifiés ayant plus de 3 atomes de carbone dans le groupe alkyle, à l'exception du méthacrylate de n-butyle,
B3 0 à 40 % d'autres monomères polymérisables par voie radicalaire choisis parmi les esters de vinyle d'acides carboxyliques saturés aliphatiques ayant de 2 à 18 atomes de carbone, les esters d'hydroxy-alkyle, les nitriles et les amides d'acides carboxyliques α,β-insaturés,
dans lesquels la somme des proportions en masse des composants B1 à B3 doit être égale à 100 %, et la proportion de la masse du mélange de monomères **A** par rapport à la masse du mélange de monomères **B** est de 50 sur 50 jusqu'à 95 sur 5,
**caractérisées en ce que**,
le copolymérisat AB présente une structure coeur-peau, et les monomères avec des groupes carbonyle et carboxyle sont seulement contenus dans le mélange de monomères constitué de A1 à A5 de la première étape, qui conduit au coeur des particules, la quantité de substance des groupes carboxyle étant toujours plus faible dans le copolymère AB que la quantité de substance des groupes carbonyle, et le rapport des quantités de substance des groupes carboxyle sur les groupes carbonyle *n* (-COOH)/*n* (>C=O) est de 0,5 à 0,95 mol/mol, et dans lesquels on ajoute ensuite des composés **C** ayant au moins deux groupes hydrazine ou hydrazide par molécule, en une quantité telle que le rapport r de la somme de la quantité de substance en groupes hydrazine *n*(-NH-NH₂) et la quantité de substance en groupes hydrazide *n* (-CO-NH-NH₂) sur la quantité de substance des groupes carbonyle *n* (>CO) soit de 0,5 à 1,1 mol/mol.

2. Dispersions aqueuses de copolymère ABC autodurcissables selon la revendication 1, **caractérisées en ce que** la teneur en groupes carbonyle s'élève à 0,2 à 1,7 mol/kg et la teneur en groupes carboxyle s'élève à 0,15 à 1,6 mol/kg, respectivement par rapport à la masse de matière solide de la dispersion.

3. Dispersions aqueuses de copolymère ABC autodurcissables selon la revendication 1, **caractérisées en ce que** jusqu'à 10 % de la masse des monomères selon A1 présente deux ou plusieurs doubles liaisons polymérisables.

4. Dispersions aqueuses de copolymère ABC autodurcissables selon la revendication 1, **caractérisées en ce que** les monomères selon A1 sont choisis parmi le diacétone(méth)acrylamide et les esters acétoacétoxyalkyliques d'acide (méth)acrylique, dont le groupe alkyle est choisi parmi les groupes 1,2-éthylène, 1,2- et 1,3-propylène, 1,4-butylène et 1,6-hexylène ainsi que 1,5-(3-oxa)pentylène et 1,8-(3,5-dioxa)octylène.

5. Dispersions aqueuses de copolymère ABC autodurcissables selon la revendication 1, **caractérisées en ce que** les monomères selon A2 sont choisis parmi l'acide acrylique et méthacrylique.

6. Dispersions aqueuses de copolymère ABC autodurcissables selon la revendication 1, **caractérisées en ce que** les monomères selon A3 et selon B1 sont choisis indépendamment l'un de l'autre parmi le (méth)acrylate de méthyle et d'éthyle et le maléinate de diméthyle.

7. Dispersions aqueuses de copolymère ABC autodurcissables selon la revendication 1, **caractérisées en ce que** les monomères selon A4 et selon B2 sont choisis indépendamment l'un de l'autre parmi les esters d'acide acrylique et méthacrylique de n-, sec.-.et iso-butanol, n-hexanol et 2-éthylhexanol.

8. Dispersions aqueuses de copolymère ABC autodurcissables selon la revendication 1, **caractérisées en ce que** les monomères selon A5 et selon B3 sont choisis indépendamment l'un de l'autre parmi le styrène, le vinyltoluène, le p-méthylstyrène et l'acétate de vinyle.

9. Dispersions aqueuses de copolymère ABC autodurcissables selon la revendication 1, **caractérisées en ce que** les composés C sont choisis parmi le dihydrazide d'acide oxalique et d'acide adipique et la diaminopipérazine.

10. Procédé pour la préparation de dispersions aqueuses de copolymère ABC autodurcissables selon la revendication 1, **caractérisé en ce qu'**on effectue dans la première étape une copolymérisation par voie radicalaire du mélange de monomères **A**, on réalise ensuite par addition d'un deuxième mélange de monomères **B** et éventuellement d'un autre initiateur de polymérisation une deuxième étape de polymérisation, et on ajoute à la dispersion aqueuse obtenue éventuellement après neutralisation au moins partielle un composé **C** avec au moins deux groupes fonctionnels choisis parmi les groupes hydrazine et hydrazide.

11. Liant pour peintures monocomposant, contenant des dispersions de copolymère selon la revendication 1.
